# EUROPEAN PATENT SPECIFICATION

(11) **EP 1 623 787 B1**
(45) Date of publication and mention of the grant of the patent: **30.04.2008**
(21) Application number: 05016807.9
(22) Date of filing: 02.08.2005
(51) Int. Cl.: B23K 20/02, B23K 1/00, F01D 5/00, B23P 6/04

(54) **Method of repairing a stator vane of gas turbine without removing all the cracks ; repaired gas turbine**
Verfahren zur Reparatur einer Statorschaufel, ohne die Risse komplett zu entfernen ; reparierte Gasturbine
Procédé de réparation d'une pâle de turbine fixe, sans éliminer totalement les fissures ; turbine à gaz réparée

(30) Priority: 03.08.2004 JP 2004226940
(43) Date of publication of application: 08.02.2006
(73) Proprietor: KABUSHIKI KAISHA TOSHIBA, Tokyo (JP)
(72) Inventor: Yoshioka, Yomei, 1-1, Shibaura 1-chome Minato-ku Tokyo (JP); Fuse, Toshiaki, 1-1, Shibaura 1-chome Minato-ku Tokyo (JP); Nakahashi, Masako, 1-1, Shibaura 1-chome Minato-ku Tokyo (JP); Saito, Daizo, 1-1, Shibaura 1-chome Minato-ku Tokyo (JP); Okamoto, Hiroaki, 1-1, Shibaura 1-chome Minato-ku Tokyo (JP); Ishibashi, Kazutoshi, 1-1, Shibaura 1-chome Minato-ku Tokyo (JP)
(74) Representative: Kramer - Barske - Schmidtchen

(56) References cited:
- US-A- 4 614 296
- US-A- 5 156 321
- US-A1- 2001 025 417
- PATENT ABSTRACTS OF JAPAN vol. 1997, no. 10, 31 October 1997 (1997-10-31) -& JP 09 168927 A (HITACHI LTD), 30 June 1997 (1997-06-30)
- PATENT ABSTRACTS OF JAPAN vol. 006, no. 142 (M-146), 31 July 1982 (1982-07-31) -& JP 57 062884 A (KAWASAKI HEAVY IND LTD), 16 April 1982 (1982-04-16)

## Description

The present invention relates to a method of regenerating gas-turbine stator vane (nozzle) of which constituting material had been deteriorated or damaged according to the preamble of claim 1 (see, for example, JP 09/168 927 A), particularly to a method of regenerating gas-turbine stator vane suffered various damages such as thermal fatigue damage, creep damage, fatigue failure caused by start and stop operation of the gas turbine, thermal deterioration, oxidation, corrosion, erosion caused by being exposed to a high temperature atmosphere, or foreign object damage (FOD) caused by collision with flying objects. The present invention also relates to a gas-turbine stator vane which is regenerated by conducting this regenerating method, and to a gas turbine provided with the regenerated stator vane.

### Description of the Related Art:

High temperature parts constituting a gas turbine, particularly a stator vane provided at a first stage corresponding to an inlet of combustion gas for the gas turbine is exposed and contacted to the combustion gas having the highest temperature. Therefore, many cracks are liable to be unavoidably caused to the stator vane. The cracks are mainly caused by thermal fatigue proceeded from thermal stress change occurred at the start and stop operations for the gas turbine. Further, the gas-turbine stator vane suffers various damages such as creep cracking, fatigue cracking, thermal deterioration, oxidation, corrosion, erosion caused by being exposed to a high temperature atmosphere, or FOD caused by the collision with flying objects. In reply to this situation, a Co-based alloy excellent in both heat resistance and repairing property has been used as a material constituting the first stage stator vane of the gas turbine for many years.

Conventionally, when aforementioned damages such as crack, oxidation, erosion, wear or the like are caused, the damaged stator vane of the gas turbine is regenerated in accordance with a method comprising the steps of: grinding or chipping (gouging) an entire cracks formed at the damaged portion of the stator vane in the gas turbine; and conducting TIG (tungsten-inert gas) welding or the like to the ground portion thereby to form a weld-repaired stator vane. Then, the resultant weld-repaired stator vane is successively used for the gas turbine.

However, as an operating temperature is heightened for the purpose of improving a turbine-efficiency, the repairing amount for the damaged portion is greatly increased. In this situation, heat affection by the welding operation during the repairing work becomes remarkable and residual stress in the stator vane is greatly increased, so that it becomes difficult to eliminate the heat affection and remove the residual stress. Moreover, an amount of deformation is also largely increased, and the deformation amount cannot be easily corrected through a standard deformation-correcting work to be performed after the repairing work.

Under these circumstances, there has been conventionally proposed a repairing method by diffusion brazing, which has been disclosed, for example, in United State Patent No. 5,320,690. The method comprises the steps of: preparing an equivalent material having a composition similar to that of the base material constituting the stator vane; preparing a brazing material into which melting point lowering agent such as Si, B or the like is added; mixing the equivalent material with the brazing material at a predetermined mixing ratio to prepare a mixed material; filling the mixed material into a cracked portion or disposing the mixed material on a reduced-thickness portion of the stator vane; and conducting a heat treatment under a temperature lower than a melting point of the base material, so that the cracked portion is refilled with a solidified mixed material, or the reduced-thickness portion is thickened (cladded).

Further, as a method of improving mechanical properties by utilizing HIP (hot isostatic pressing) treatment, for example, Japanese Patent Application (Laid-Open) No. SHO-57-207163 has proposed a method of improving mechanical properties of alloy parts. In the above method, creep voids caused by the operation of the gas turbine are intended to be eliminated by conducting the HIP treatment.

Furthermore, for example, Japanese Patent Application (Laid-Open) No. HEI. 11-335802 has also proposed a technique relating to a method of recovering the gas turbine part from deteriorations or damages thereof, and relating to a gas turbine part which is subjected to the above recovering treatment. In the method, a structure of the gas turbine part deteriorated by the operation of the gas turbine is recovered by substantially the same method as in above Japanese Patent Application No. SHO-57-207163.

Still further, for example, Japanese Patent Application (Laid-Open) No. SHO. 57-62884 has also proposed a welding treatment technique in which welding defects caused during welding treatment for an abutting portion of a wheel and a rotor blade implanted in the wheel are eliminated by HIP (hot isostatic pressing) treatment.

However, since the cracks caused by the thermal stress or the thermal fatigue resulting from the start and stop operations of the gas turbine are unavoidably generated in a large number, when the conventional repairing method in which the cracked portion is entirely ground and then the ground portion is repair-welded by TIG method is adopted, a repairing amount necessary for the welding is greatly increased. In addition, the heat affection by the welding operation during the repairing work becomes remarkable and residual stress is greatly increased, so that it becomes difficult to eliminate the heat affection and remove the residual stress. Moreover, an amount of deformation is also largely increased, and the deformation amount cannot be easily corrected through a standard deformation-correcting work to be performed after the repairing work.

Further, as explained above, according to the conventional repairing method comprising the steps of: mixing a material having substantially the same composition as that of the base material with the brazing material containing the melting point lowering agent such as Si, B or the like at a predetermined mixing ratio thereby to prepare a mixed material; filling the mixed material into a cracked portion or disposing the mixed material on a reduced-thickness portion; and conducting a heat treatment under a temperature lower than a melting point of the base material, so that the cracked portion is refilled with a solidified mixed material, or the reduced-thickness portion is cladded, the following problems are raised. Namely, segregation of the melting point lowering agent is liable to occur, and the mixed material and the base material are bonded without completely melting the base material, so that there cannot be obtained a sufficient bonding strength at a boundary surface between the two materials. As a result, there cannot be obtained a fatigue strength or ductility corresponding to those of the base material.

Further, even in any of other conventional techniques, the oxidized films formed on the cracks caused during the operation of the gas turbine cannot be easily removed. Therefore, the removing operation had been performed in such a manner that the cracks including closed cracks each having a length exceeding an allowable range had been completely removed by grinding or gouging, thereby to perform the repairing operation. Accordingly, it requires much labor for grinding or gouging the cracked portion, thus resulting in high-cost situation.

Patent Abstracts of Japan JP 09-168927 A discloses a method of repairing a cracked moving blade or a cracked stator blade for a gas-turbine. This known method comprises the steps of: grinding and eliminating a crack generated part; joining an auxiliary plate made of the same material as the moving blade and the stator blade; laser-welding the brazed joint part surface; and conducting a HIP (Hot Isostatic Pressing) treatment to the welded portion thereby to repair the cracked moving blade or the cracked stator blade. In the method according to D1, B-group powder of Ni-3.5% Si-1.5%B type powder or Ni-23%Co-10%Cr-7%Mo6%Fe-3%B type powder is inserted between raw material (moving blade or stator blade) and the auxiliary plate, and joined in vacuum. The brazing operation is performed in vacuum or a pressurized inert-gas atmosphere with a pressure of 0.3-10gf/mm² (3-10 KPa), then HIP treatment is performed under the conditions (1150°C, 167MPa) so as to penetrate the brazing material into the remaining cracks.

US 4,614,296 discloses a technique relating to a diffusion brazing process for a Ni-based or Co-based refractory super alloy containing at least 50 wt% or more of Ni or Co. A brazing material consists of at least two alloy powders in appreciably unequal proportions. Concretely, the brazing material consists of 75wt% of a base powder having the same composition as the base material (blade material: NK17CDAT) and 25 wt% of an addition powder having a composition of 15%Cr-3.5%B-balance Ni and having a melting point lower than that of the base powder or the base material. When a heat treatment is performed at a temperature at which the addition powder is molten while the base powder and the base material are not molten, the molten addition powder is retained by the base material by the action of capillary phenomenon.

US 2001/0025417 A1 discloses a technique relating to a method of repairing a damaged gas turbine component, and also discloses a soldering process and a soldering material capable of eliminating conventional disadvantages and capable of easily performing the repairing operation. The method comprises the steps of: applying an open-celled metallic foam having a porosity of 60-95% to the tear or material defect; introducing of solder powder into the pores of the metallic foam; and heating the powder containing the foam to a temperature which is above the melting temperature of the soldering powder.

US-A-5156321 discloses a powder metallurgy repair technique for repairing a joint portion or cracked portion of a metal article with the following steps of: cleaning the repair area to remove oxides and defects; forming a sintered layer of matching metal powder to form a porous structure; applying a metal powder layer, of which melting point is lowered, on the sintered layer; heating the metal article to a temperature at which the metal powder layer is molten while the sintered layer and the base material are remaining solid, so that the metal powder layer flows to the sintered layer by the action of a capillary phenomenon and a liquid phase sintering is promoted thereby to form a dense bonding layer of which composition is similar to that of the base material.

### Summary of invention

It is an object of the invention to provide a method of regenerating a gas-turbine stator vane, which is simply to be performed and results in a regenerated gas-turbine stator vane of a good quality.

In order to overcome and solve the problems that the amount of repairing work is increased as the operating temperature of the gas turbine is heightened, the heat affect, the residual stress and the amount of deformation are increased, and that it is difficult to correct the deformation even in the correction step, the inventors of the present invention had conducted much experiments and researches.

As a result, as one reason for increasing the heat affect and the residual stress in the gas turbine stator vane to be an object of the repairing operation, the inventors had paid attention to a point of that the amount of grinding or gouging requiring to remove the oxidized portion of the stator vane at which cracks had occurred.

Namely, when a periodic inspection or the like is conducted and a total length of the cracks formed to the stator vane is found to be longer than a chord length of the stator vane, such a point in time is recognized as a time for repairing the gas turbine stator vane. Then, all of the oxidized layers formed on the cracks having a non-allowable size and all of the cracks including the closed crack of which end portion is closed are ground to be completely removed. Thereafter, a repair welding is performed. Therefore, it takes much working hours to perform the grinding work due to a large amount of grinding. In addition, a welding amount for the repair is also greatly increased, thus resulting in a large amount of deformation after completion of the repairing operation.

The reason why the above problems are raised is as follows. Namely, although a thickness of the oxidized film formed on an inner surface of the crack occurred at the stator vane is small, it has been considered that a removing work by grinding all of the oxidized films together with all of the cracks is essentially required for completely repairing the stator vane.

In contrast, according to investigations conducted by the inventors of this invention, the following facts became clear. Namely, at a time of performing the heat treatment for the diffusion-brazing under a pressurized inert gas atmosphere, when a self-cleaning function of the brazing material i.e., a function of dissolving and removing the oxidized film from the base material is intensified, it became clear that the repairing operation by brazing could be effectively performed without grinding thin oxidized films formed on inner surface of the crack.

Further, the following fact also became clear. That is, in general, a residue of the melting point lowering components such as silicon (Si), boron (B) or the like contained in the brazing material becomes a factor of lowering a strength of the repaired portion. However, when the diffusion of the melting point lowering components to the base material is promoted, an amount of the melting point lowering components remained in the brazing material can be decreased, so that it becomes possible to remove the factor of lowering the strength of the brazing material.

Furthermore, the following fact also became clear. Namely, when the brazing material was steadily penetrated into a tip end portion of the crack formed in the base material, the diffusion of the melting point lowering agent into the base material became possible to be more surely promoted.

The aforementioned object of the present invention is achieved by realizing the above three functions, i.e., (i) the function of decreasing a thermal deformation caused by a local heat input during the repair-welding using the diffusion-brazing method, or decreasing a deformation caused by a residual stress during the welding work; (ii) the function of saving man-power by intensifying the self-cleaning function resulting in reduction of an amount of the base material to be ground; (iii) the function of improving the strength of a repairing portion in accordance with a method in which the repairing portion is sealed by a heat treatment for heating a material layer of which melting point is lowered, then under the sealed condition, the sealed portion is pressurized whereby the brazing material is penetrated and diffused into the crack.

The present invention provides a method of regenerating gas-turbine stator vane composed of base material and having cracks formed in the base material and oxidized layer formed at surface portion of the base material according to claim 1.

It is further preferable that when a total length of the cracks is longer than a chord length of the stator vane, the oxidized layer formed on entire surface of the stator vane is ground and the cracked portions are ground without completely grinding the cracked portion so that a part of the cracks remains, then an entire stator vane is covered with the equivalent material and the brazing material so as to completely repair the cracks.

The temperature for the heat treatment under the pressurized atmosphere is set to a range of 1150°C to 1260°C, and most preferably set to a range of 1150°C to 1210°C.

Furthermore, it is also preferable that the equivalent material has a composition containing 20-35 wt% of Cr, 5-60 wt% of Ni, 0.5-2 wt% of Fe, 5-10 wt% of W, 0.1-0.5 wt% of C, 0.005-2 wt% of B, and balance of Co, while the brazing material has a composition containing 10-40 wt% of Cr, 8.5-70 wt% of Ni, 0.5-2 wt% of Fe, 9 wt% or less (including 0%) of W, 0.001-0.6 wt% of C, 0.01-3.5 wt% of B, 1.0-11 wt% of Si, 2 wt% or less (not including 0%) of Mn, and balance of Co.

Still further, it is also preferable that the brazing material has a composition containing 10-40 wt% of Cr, 8.5-70 wt% of Ni, 0.5-2 wt% of Fe, 9 wt% or less (including 0%) of W, 0.001-0.6 wt% of C, 0.01-3.5 wt% of B, 1.0-11 wt% of Si, 2 wt% or less (not including 0%) of Mn, and balance of Co.

Furthermore, it is also preferable that the equivalent material has a composition containing 5-35 wt% of Cr, 5-75 wt% of Ni, 2 wt% or less (including 0%) of Fe, 12 wt% or less (not including 0%) of W, 0.6 wt% or less (not including 0%) of C, 1 wt% or less (including 0%) of B, 2 wt% or less (including 0%) of Hf, 6 wt% or less (not including 0%) of Ti, 3 wt% or less (not including 0%) of Nb, 5 wt% or less (including 0%) of Re, 5 wt% or less (including 0%) of Mo, 8 wt% or less (not including 0%) of Ta, 65 wt% or less (not including 0%) of Al, 0.7 wt% or less (including 0%) of Zr, and balance (5-65%)of Co, while said brazing material has a composition containing 10-40 wt% of Cr, 8.5-70 wt% of Ni, 0.5-2 wt% of Fe, 9 wt% or less (including 0%) of W, 0.001-0.6 wt% of C, 0.01-3.5 wt% of B, 1.0-11 wt% of Si, 2 wt% or less (not including 0%) of Mn, and balance of Co.

According to the present invention, the cracked portion can be completely repaired by using the diffusion-brazing treatment without requiring to completely grind and remove the cracks including closed cracks formed at surface of the gas turbine stator vane. At this time, when the heat treatment for the diffusion-brazing treatment is conducted under the pressurized inert gas atmosphere, it becomes possible to strengthen the self-cleaning function of dissolving the oxidized film thereby to reduce a thickness thereof, so that the repairing operation using the brazing material becomes possible without grinding the thin oxidized film. In addition, the diffusion of the melting point lowering agent into the base material can be promoted, so that it becomes possible to remove a factor of lowering the strength of the repaired portion. Further, the brazing material can be penetrated into a tip portion of the crack thereby to firmly bond the crack with the brazing material, thus capable of exhibiting the aforementioned three functions.

By constituting in this manner, there can be provided a method of regenerating gas-turbine stator vane, which can perform a regenerating treatment in which the gas-turbine stator vane formed with deteriorated portion or damages such as crack can be efficiently regenerated without requiring to completely grind and remove the cracks including the closed cracks, and without requiring an extra correction of deformation because the deformation can be small due to less heat affect and residual stress, thereby to provide a regenerated stator vane having a high quality.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is an explanatory view showing a regenerating process as an embodiment of the present invention;
FIG. 2 is a flowchart showing a procedure for the regenerating treatment in the embodiment of the present invention;
FIG. 3 is a graph showing a relationship between a pressure and a self-cleaning function in the embodiment of the present invention;
FIG. 4 is a microphotograph showing a structure of a repaired portion in an embodiment of the present invention;
FIG. 5 is a microphotograph showing a structure of a repaired portion in an embodiment of the present invention;
FIG. 6 is a microphotograph showing a structure of a repaired portion in an embodiment of the present invention; and
FIG. 7 is a microphotograph showing a structure of a repaired portion in an embodiment of the present invention.

### DESCRIPTION OF THE PREFERRED EMBODIMENTS

Referring to the accompanying drawings, an embodiment of the present invention will be now explained.

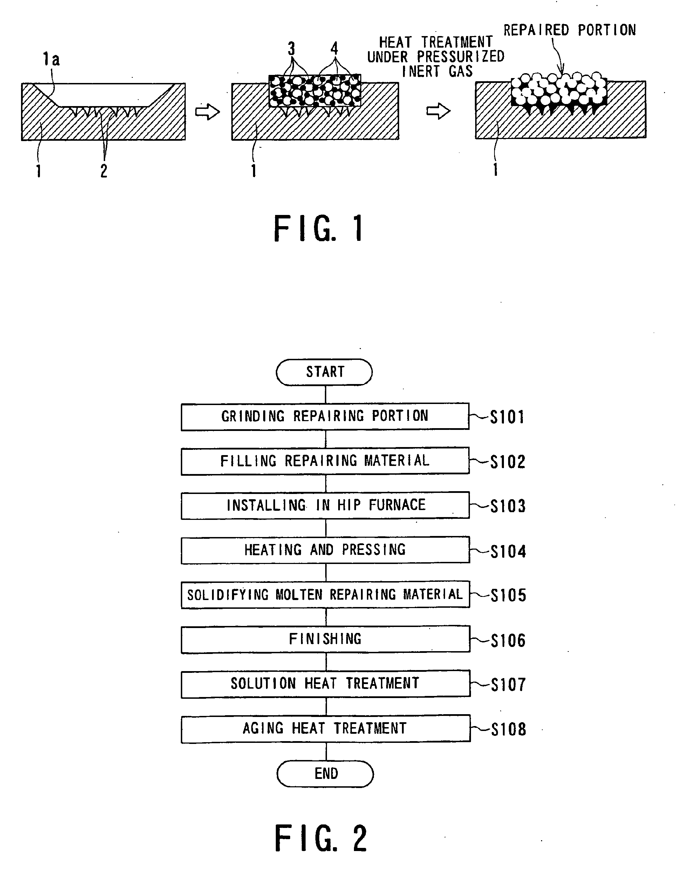

FIG. 1 is an explanatory view showing a process of regenerating a gas turbine stator vane, as one embodiment of the present invention, and FIG. 2 is a flowchart showing a procedure for the regenerating treatment.

As shown in FIGs. 1 and 2, in the embodiment of the present invention, a repairing portion of a base material 1 composed of Ni-based alloy in the gas turbine stator vane is ground by means of grinder or the like (S101). In this case, an oxidized layer formed at surface portion of the gas turbine stator vane at which cracks 2 are generated is ground so that a part of the cracks 2 remains. That is, although the oxidized layer formed at surface portion of the gas turbine stator vane is ground, the cracks are not completely ground but ground so as to remain a part of the cracks in a ground portion 1 a.

Namely, with respect to the closed cracks, a surface layer portion partially including the cracks is uniformly ground, while a deep portion of the cracks is remained. Under this state of the part of the cracks being remained, the heat treatment is conducted under the pressurized inert gas atmosphere. As a result, it becomes possible to strengthen the self-cleaning function and to fill the brazing material into the tip portions of the cracks. Notes, when a periodic inspection or the like is conducted and a total length of the cracks formed to the stator vane is found to be longer than a chord length of the stator vane, such stator vane shall be determined as an object to be subjected to this regenerating treatment.

Next, as shown in FIGs. 1 and 2, an equivalent material (powder) 3 having an equality with a base material of the stator vane and a brazing material (powder) 4 having a melting point lower than that of the equivalent material (powder) 3 are prepared as a repairing material. Then, the repairing material is filled into the ground portion 1 a (S102).

In the present embodiment, a Co-based super alloy (trade name: FSX414) was used as the base material for constituting the stator vane. On the other hand, the equivalent material 3 having a composition containing 20-35 wt% of Cr, 5-60 wt% of Ni, 0.5-2 wt% of Fe, 5-10 wt% of W, 0.1-0.5 wt% of C, 0.005-2 wt% of B, and balance of Co, was applied to the equivalent material 3. In Table 1 shown hereunder, examples of the compositions of the base material 1, the equivalent material 3 and the brazing material 4 are indicated.

**[Table 1]**

| Material | | Cr | Ni | Fe | C | W | B | Ta | Si | Co |
|---|---|---|---|---|---|---|---|---|---|---|
| Base Material: FSX-414 | | 29.5 | 10.6 | 0.62 | 0.26 | 7.04 | 0.01 | - | - | Balance |
| Repainig Material | Equivalent Material | 23.3 | 10.2 | 0.6 | 0.6 | 7.1 | | 3.6 | 3.6 | Balance |
| | Brazing Material | 13.1 | Balance | - | 0.002 | - | 2.6 | - | 4.0 | 20.0 |

By the way, an equivalent material corresponding to the base materials such as, for example, In939 (trade name), GTD222 (trade name) or the like other than the material shown in Table 1 can be also adopted as a material for constituting the stator vane. For example, these materials have a composition containing 5-35 wt% of Cr, 5-75 wt% of Ni, 2 wt% or less (including 0%) of Fe, 12 wt% or less (not including 0%) of W, 0.6 wt% or less (not including 0%) of C, 1 wt% or less (including 0%) of B, 2 wt% or less (including 0%) of Hf, 6 wt% or less (not including 0%) of Ti, 3 wt% or less (not including 0%) of Nb, 5 wt% or less (including 0%) of Re, 5 wt% or less (including 0%) of Mo, 8 wt% or less (not including 0%) of Ta, 65 wt% or less (not including 0%) of Al, 0.7 wt% or less (including 0%) of Zr, and balance (5-65%)of Co.

Further, as the brazing material 4, the brazing material having a composition containing 10-40 wt% of Cr, 8.5-70 wt% of Ni, 0.5-2 wt% of Fe, 9 wt% or less (including 0%) of W, 0.001-0.6 wt% of C, 0.01-3.5 wt% of B, 1.0-11 wt% of Si, 2 wt% or less (not including 0%) of Mn, and balance of Co is adopted. One example of the composition of the brazing material is shown in above Table 1. That is, the brazing material 4 is a powder to which several percent of boron (B) and silicon (Si) are added so that a melting point of the material is lowered.

According to the present invention, the mixture of the equivalent material 3 and the brazing material 4 is filled into the ground portion 1 a so as to form a three-layered structure comprising: an outermost layer (upper side of the base material shown in FIG. 1), a base-side layer (lower side of the base material shown in FIG. 1) and an intermediate layer interposed between the outermost layer and the base-side layer. In this three-layered structure, a ratio of the brazing material 4 contained in the outermost layer or the base-side layer is larger than that of the intermediate layer, and a ratio of the equivalent material contained in the intermediate layer is set to be larger than those of the other two layers.

In another structure, it is preferable that an amount ratio of the brazing material is step-wisely or continuously increased in a range from the intermediate layer toward the outermost layer or the base-side layer.

After the repairing material is filled into the repairing portion, a heat treatment is conducted under a pressurized atmosphere composed of inert gas such as Ar gas or the like, so that the brazing material 4 is molten and a diffusion-brazing into portions of the cracks 2 is performed. For example, as shown in FIGs. 1 and 2, the base material 1 filled with the repairing material is disposed in a HIP furnace (S103). Then, a heat treatment is conducted under the pressurized atmosphere (S104). The heating temperature is set to a temperature at which a powdery brazing material 3 having a lowered melting point can be molten and a powdery equivalent material 4 is not molten.

Concretely, when a solution heat treatment and an aging heat treatment are conducted after completion of the heat treatment under the pressurized atmosphere, the repairing portion can be effectively repaired without causing a deformation during the repairing operation. In this regard, a pressure condition for the pressurizing treatment is set to 100 - 200 MPa. Further, the solution heat treatment and the aging heat treatment are performed at a temperature lower than a temperature at which the base material is partially molten, or performed at a temperature lower than a temperature at which a cell structure formed of eutectic carbide is collapsed. Concretely, the temperature for the solution heat treatment or the aging heat treatment is set to a range of 1100°C to 1300°C.

After the repairing portion is held in the furnace under the above conditions for about 30 minutes to several hours, the repairing portion is cooled to a room temperature so as to solidify the molten repairing material (S105), and then, the stator vane is taken out from the HIP furnace (S106). Subsequently, the stator vane is subjected to the solution heat treatment (S107) and the aging heat treatment (S108) in a vacuum furnace, thereby to complete the repairing operation.

Next, concrete examples of the present invention will be explained hereunder.

Table 2 listed hereunder shows a relationship between the pressure and the self-cleaning function when the pressing treatment is performed in the present embodiment.

**[Table 2]**

| Sample No. | Treating Temperature | Pressure | Oxidized Film Thickness | Remark |
|---|---|---|---|---|
| | (°C) | (MPa) | (mm) | |
| Comparative Example 1 | - | - | 0.8 | Non-Processed State |
| Comparative Example 2 | 1150 | 90 | 0.75 | |
| Example 1 | 1150 | 95 | 0.02 | |
| Example 2 | 1150 | 100 | 0.001 | |
| Example 3 | 1150 | 115 | 0.002 | |
| Comparative Example 3 | 900 | 115 | 0.8 | |
| Example 4 | 1100 | 115 | 0.072 | |
| Example 5 | 1200 | 115 | 0.01 | |

As is clear from the results shown in above Table 2, according to the repaired portions of Examples 1 to 5 that were subjected to the heat treatment at a temperature of 1100°C or higher and at a pressure of 95 MPa or higher, each of the thickness of the oxidized films was 0.072 mm or less, although the sample of stator vane of Comparative Examples 1 that was not subjected to any treatment showed an oxidized layer having a large thickness of 0.8 mm.

In contrast, in cases of samples of Comparative Example 1 that was not treated, Comparative Example 2 that was treated at a pressure of 90 MPa, and Comparative Example 3 that was treated at a temperature of 900°C, each of the thickness of the oxidized films was 0.75 mm or more. Therefore, it was confirmed that the self-cleaning function could not be obtained in these Comparative Examples.

In view of the above facts, the effect of the self-cleaning function was remarkably recognized when the samples were repaired under the temperature condition of 1100°C or higher and at a pressure of 95 MPa or higher.

Next, Table 3 listed hereunder shows results of a tensile test conducted after the samples of Examples 6-8 according to the present invention and Comparative Examples of 4 and 5 were processed.

**[Table 3]**

| Sample No. | Repairing Method | Stator Vane Thickness | Grinding Amount | Treating Temperature | Treating Pressure | Tensile Strength | Tensile Ductility |
|---|---|---|---|---|---|---|---|
| | | (mm) | (mm) | (°C) | (MPa) | (MPa) | (%) |
| Example 6 | - | 4 | 0.5 | 1150 | 1000 | 600 | 50 |
| Example 7 | - | 4 | 1.0 | 1150 | 100 | 560 | 59 |
| Example 8 | - | 4 | 1.5 | 1150 | 100 | 570 | 48 |
| | Base Material | 4 | - | - | - | 580 | 55 |
| Comparative Example 4 | Conventional TIG | 4 | - | - | - | 600 | 46 |
| Comparative Example 5 | Repairing Method | 4 | - | - | - | 550 | 10 |

The above Table 3 shows results of the tensile test conducted at normal temperature with respect to the samples of Examples 6-8 that had been processed in accordance with a method comprising the steps of: cutting out a sample having a crack from a stator vane assembled in an actual gas turbine; grinding a surface of a cracked portion at a grinding amount of 0.5-1.5 mm; repairing a ground portion by brazing; conducting HIP treatment at a temperature of 1150°C and a pressure of 1000 MPa; conducting a solution heat treatment as an ordinary heat treatment at a temperature of 1150°C for two hours; and conducting an aging heat treatment at a temperature of 950°C for four hours.

Table 3 also shows the results of the tensile test with respect to the samples of Comparative Examples 4-5 that had been repaired in accordance with a conventional TIG (tungsten inert gas) weld-repairing method.

As is clear from the results shown in Table 3, in case of the samples of Examples 6-8, it was confirmed that strength properties equivalent to those of the base material could be obtained in regardless of the grinding amount and the residual amount of the cracks.

Table 4 shows results of measuring a grinding amount and a deformation amount with respect to the samples of the stator vanes of Examples 9-10 that had been processed in accordance with a method comprising the steps of: taking out a sample of stator vane having a cracks from a gas turbine actually-operated for 60000 hours; grinding a surface of a cracked portion at a grinding amount of 1-1.5 mm; and uniformly repairing the ground portion by brazing method under a pressurized atmosphere.

Table 4 also shows the results of Comparative Example 6 that had been repaired in accordance with a conventional method in which a cracked portion of the stator vane was completely ground and removed, and then TIG weld-repairing operation was performed to the ground portion. Each of the deformation amount of the samples was measured by a drop-checking method (deformation amount test).

**[Table 4]**

| Sample No. Sample No. | Grinding Amount | Deformation Amount |
|---|---|---|
| | (mm) | (mm) |
| Example 9 | 1 | +0.2 |
| Example 10 | 1.5 | -0.3 |
| Comparative Example 6 | - | +4.2 |

As is clear from the results shown in Table 4, it was confirmed that the deformation amount of Comparative Example 6 was large to be 4.2 mm, whereas the deformation amounts of Examples 9, 10 were extremely small to be +0.2 to -0.3 mm. In these Examples 9,10, a penetrated crack was repaired so that the crack was blocked up by conducting only the brazing treatment. Therefore, a local heat input was not imparted at all to the base material of the stator vane, whereby the deformation of the stator vane was hardly observed even before and after the processing the stator vane.

Table 5 shows results of measuring: a degree of denseness of an intermediate layer in which a mixing ratio of the equivalent material and the brazing material was changed; and a degree of filling the repairing material into the cracked portion in the respective Examples 11-15 and Comparative Examples 7-11.

Table 5 also shows the results of the tensile test with respect to test pieces mainly sampled from each of the intermediate layers of the respective stator vanes.

**[Table 5]**

| Sample No. | HIP Process Condition | | Repairing Material Composition (Mixing Ratio/Equvatent Material:Brazing Material) | | | | | Effect of HIP | Degree of Filling Repairing Material into Crack | Tensile strength | Tensile Elongation |
|---|---|---|---|---|---|---|---|---|---|---|---|
| | Temperature (°C) | Pressure (MPa) | Outermost Layer | Intermadiate Layer 1) | Intermadiate Layer 2 | Intermadiate Layer 3 | Base-Side Layer | (Dense Degree of Intermadiate Layer) | | (MPa) | (%) |
| Example 11 | 1170 | 100 | 5:5 | 8:2 | | | 5:5 | ⊚ | ⊚ | 600 | 27 |
| Example 12 | 1170 | 100 | 5:5 | 7:3 | 8:2 | 60:40 | 5:5 | ⊚ | ⊚ | 610 | 24 |
| Example 13 | 1170 | 100 | 5:5 | Continuously Changed | 8:2 | Continuously Changed | 5:5 | ⊚ | ⊚ | 590 | 23 |
| Example 14 | 1170 | 100 | 5:5 | Stepwisely Changed | 8:2 | Stepwisely Changed | 5:5 | ⊚ | ⊚ | 620 | 26 |
| | | | | 6:4→7:3 | | 7:3→6:4 | 5:5 | ⊚ | ⊚ | | |
| Example 15 | 1170 | 100 | 5:5 | 8:2 | | | | ⊚ | ○ | 630 | 28 |
| C.Ex.7 | 1170 | 100 | 5:5 | 8:2 | | | | × | × | 510 | 15 |
| | | | | | | | | (Porus) | (Voids) | | |
| C.Ex. 8 | 1170 | 100 | 5:5 | 5:5 | 8:2 | | | ⊚ | × (Voids) | 610 | 23 |
| | | | | 5:5 | | | | | | | |
| C.Ex. 9 | 1170 | 100 | 5:5 | | | | | ⊚ | ⊚ | 540 | 8 |
| C.Ex. 10 | 1170 | 100 | 5:5 | 6:4 | | | 6:4 | ⊚ | ○ | 580 | 21 |
| C.Ex. 11 | 1150 | 98 | 5:5 | 6:4 | | | 6:4 | ⊚ | Δ | 560 | 19 |

| | | | | | | | | | | | |
|---|---|---|---|---|---|---|---|---|---|---|---|
| C.Ex. Denotes a Comparative Example. | | | | | | | | | | | |

The stator vanes of Examples 11-15 and Comparative Examples 7-11 were regenerated in accordance with the method comprising the steps of: grinding the oxidized layer and the cracks so that a part of the cracks remains thereby to form a ground portion; filling into the ground portion the repairing material consisting of the equivalent material and the brazing material, and having a mixing ratios shown in Table 5 thereby to form a filled portion comprising an outermost layer, at least one intermediate layer and a base-side layer; heat treating the filled portion under a temperature of 1210°C for 10 minutes so as to melt the brazing material and to seal off the repairing portion by a solidified brazing material so that the outermost layer can accept a pressing effect by HIP treatment; conducting the HIP treatment under the conditions shown in Table 5 thereby to perform a brazing treatment by diffusing the molten brazing material into the cracked portions; conducting a solution heat treatment at a temperature of 1150°C for four hours; and conducting an aging heat treatment at a temperature of 980°C for four hours. Then, the respective samples including the repaired portion were set so as to perform a structure observation and a mechanical test.

As a result, according to Examples 11-15 in which the mixing ratio of the brazing material was increased in the outermost layer and the base-side layer, while the amount ratio of the powder having a composition equivalent to that of the base material was increased in the intermediate layer, it was confirmed that all the degree of denseness, the degree of filling, strength, ductility (tensile elongation) were excellent in comparison with those of Comparative Examples 7-11 in which the mixing ratio of the brazing material was not increased in the outermost layer and the base-side layer, while the amount ratio of the powder having a composition equivalent to that of the base material was not increased in the intermediate layer.

Next, Table 6 listed hereunder shows results of structure-observations and tensile tests of the repaired portions in Examples 16-23 and Comparative Examples 12-13. Namely, Table 6 shows the results of evaluation for the respective structures comprising the base material and the brazed portion, and shows results of evaluation for the states of the repairing materials being filled into the crack, when the HIP conditions of temperature and pressure were changed as shown in Table 6.

**[Table 6]**

| Sample No. | HIP Process Condition | | Structure Observation Results | | | | | Tensile Test Result of Repaired Portion | |
|---|---|---|---|---|---|---|---|---|---|
| | Temperature (°C) | Pressure (MPa) | Base Material Structure | | Repaired Portion Structure | | State of Repairing Material filled into Crack | Tensile strength (MPa) | Tensile Elongation (%) |
| C.Ex. 12 | 1080 | 100 | ⊚ | | × | (Brazing Material Structure Clearly Remain) | Δ | 400 | 8 |
| Example 16 | 1110 | 100 | ⊚ | | Δ | (Brazing Material Structure Somewhat Remain) | O | 600 | 17 |
| Example 17 | 1145 | 100 | ⊚ | | O | (Brazing Material Structure Somewhat Remain) | O | 630 | 18 |
| Example 18 | 1150 | 100 | ⊚ | | ⊚ | | ⊚ | 640 | 20 |
| Example 19 | 1205 | 100 | ⊚ | | ⊚ | | ⊚ | 660 | 25 |
| Example 20 | 1215 | 100 | O | (Sign of Partial Collapse of Cell Structure) | ⊚ | | ⊚ | 630 | 28 |
| Example 21 | 1260 | 100 | O | (Sign of Partial Collapse of Cell Structure) | ⊚ | | ⊚ | 640 | 15 |
| Example 22 | 1265 | 100 | Δ | Δ (Partial Collapse of Cell Structure) | ⊚ | | ⊚ | 580 | 10 |
| Example 23 | 1290 | 100 | Δ | (Partial Collapse of Cell Structure) | ○ | (Sign of Partially Melt and Flow) | ⊚ | 560 | 11 |
| C.Ex. 13 | 1305 | 100 | × | (Collapse of Cell Structure) | × | (Partially Melt and Flow) | Δ | 490 | 9 |

| | | | | | | | | | |
|---|---|---|---|---|---|---|---|---|---|
| C.Ex. Denotes a Comparative Example. | | | | | | | | | |

The repaired portions of Examples 16-23 and Comparative Examples 12-13 were processed in accordance with the method comprising the steps of: preparing a first sheet member having a composition containing 50% of the equivalent material and 50% of the brazing material; preparing a second sheet member having a composition containing 80% of the equivalent material and 20% of the brazing material; disposing the first sheet member as the outermost layer and the base-side layer (bottom) on the repairing portion; disposing the second sheet member as the intermediate layer between the outermost layer and the base-side layer; heat treating the three-layered structure under a temperature of 1210°C for 10 minutes so as to melt the brazing material; conducting the HIP treatment under the conditions shown in Table 6 thereby to perform a brazing treatment by diffusing the molten brazing material into the cracked portions. Thereafter, each of samples was subjected to a solution heat treatment at a temperature of 1150°C for four hours; and an aging heat treatment at a temperature of 980°C for four hours. Then, the respective samples including the repaired portion were set so as to perform the structure observation and the mechanical test.

As a result, as shown in table 6, according to Comparative Example 12 in which HIP treatment was performed at 1100°C or lower, the filling of the repairing material into the crack could not be sufficiently realized. In addition, the structure of the repaired portion could not reveal a uniform structure in which the brazing material and the equivalent material were completely alloyed, so that a sufficient strength and ductility (tensile elongation) could not be obtained.

In contrast, according to Examples 16, 17 in which HIP treatment was performed at 1100°C or higher, both the structure of the repaired portion and the degree of filling of the repairing material into the crack could be sufficiently improved, so that there could be obtained the good characteristics of both strength and ductility equivalent to the base material. Further, in case of Examples 18, 19 in which HIP treatment was performed at 1150°C or higher, the improvement was further advanced, so that the characteristics almost the same as those of the base material could be obtained.

In the repaired portion of Example 20 prior to HIP treatment, there was formed a cell structure composed of carbide which had been formed during a casting operation of the base material. However, in case of Example 20 in which HIP treatment was performed at 1210°C or higher, a part of carbide was dissolved to form a solid-solution, so that there was a sign of starting to collapse the cell structure.

Further, in case of Examples 21-23 in which HIP treatment was performed at 1260°C or higher, there was a sign of starting to partially collapse the cell structure, and a sign of lowering the characteristics of the repaired portion. In case of Comparative Example 13 in which HIP treatment was performed at 1300°C or higher, the collapse of the cell structure was clearly observed, so that remarkable lowering of the characteristics was recognized.

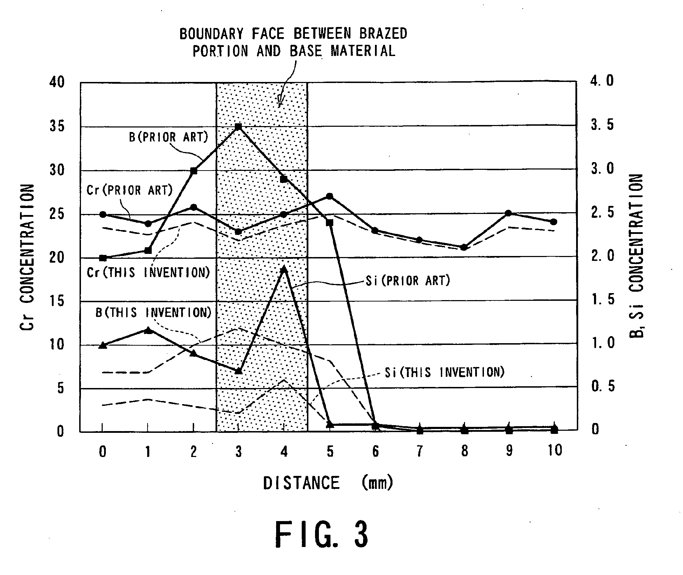

FIG. 3 is a graph showing a result of elementary analysis of boundary faces in samples subjected to a pressing treatment in accordance with the method of the present invention.

In FIG. 3, a horizontal axis indicates a distance (mm) from a repairing material side to the base material side, while a vertical axis indicates concentrations of elements such as Cr, B, Si contained in the repairing material, the elements of B and S having a function of lowering a melting point of the brazing material. The solid lines indicate the results of the samples treated in accordance with a prior art method, while the broken lines indicate the results of the samples treated in accordance with a method of this invention.

As is clear from the results shown in FIG. 3, the following facts could be confirmed. Namely, in case of the process according to the present invention, when the regenerating treatment was performed, the contents of B and Si were greatly decreased at a boundary region between the brazed portion and the base material in comparison with those in the prior art method.

That is, B and Si having an effect of lowering the melting point of the brazing material were dispersed and penetrated into the base material side after the regenerating treatment was conducted. As a result, a melting point of the boundary region between the brazed portion and the base material was heightened. Therefore, in a case where the repaired stator vane is reused, a heat resistant effect of the brazed portion is improved, and a strength of the stator vane operated at a high temperature is increased, so that a sufficient durability can be exhibited.

Namely, according to this embodiment, it was confirmed that a segregation of the elements contained in the brazing material, particularly the elements such as B, Si or the like having a function of lowering the melting point of the brazing material was greatly improved. Further, Cr content was also decreased at the repairing face as the same manner as B, Si contents.

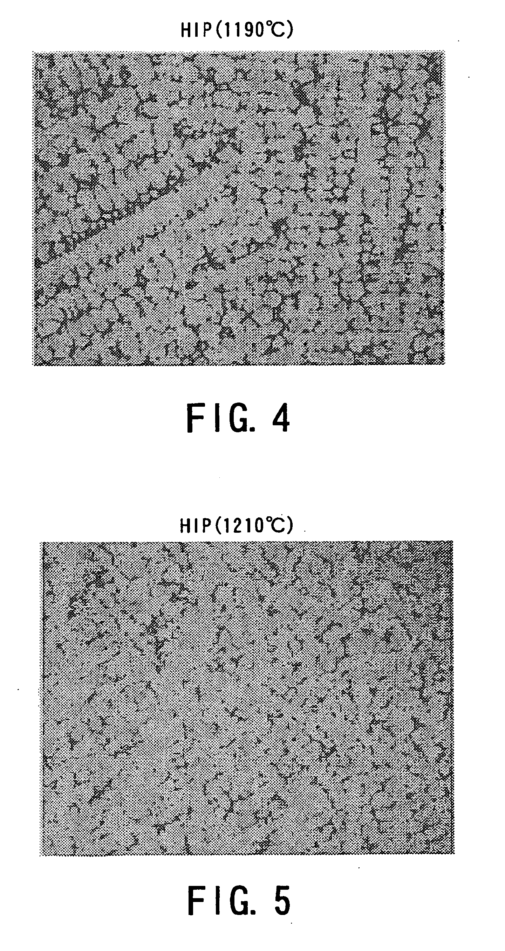

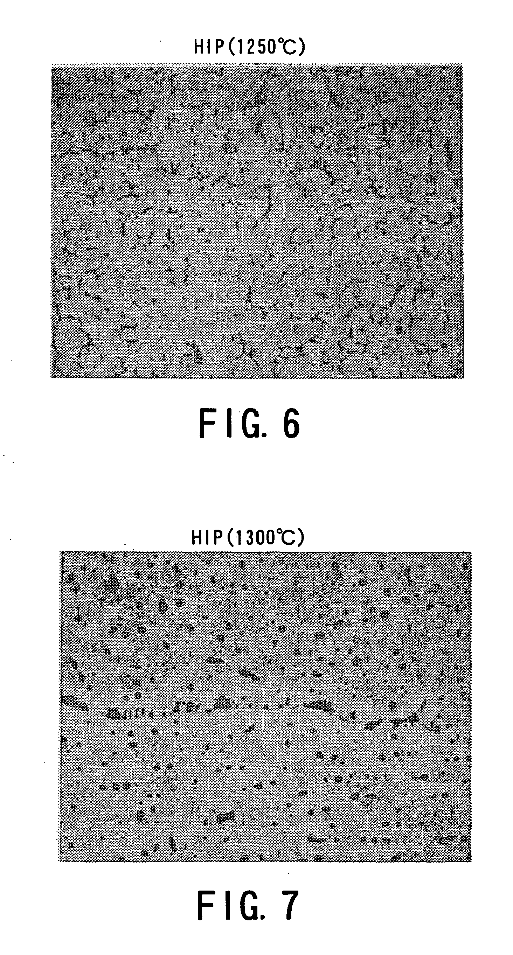

FIGs. 4 to 7 are microphotographs each showing a structure of a repaired portion in embodiments of the present invention, and showing a state where the segregation of the elements such as B, Si or the like was improved.

FIGs. 4 to 7 show respective structures of the repaired portions in embodiments in which the heat treatments (HIP) were conducted at temperatures of 1190°C, 1210°C, 1250°C, 1300°C, respectively. In the respective figures, it was clearly confirmed that the segregation of elements such as B, Si or the like indicated by shade portion was decreased as the temperature for the heat treatment was heightened.

As a result, according to this embodiment, the following excellent functions can be exhibited. Namely, at the time of completely repairing a defected stator vane by using a diffusion-brazing method, when the heat treatment for the diffusion-brazing method is conducted under a pressurized inert gas atmosphere, the self-cleaning function can be strengthened.

Further, it becomes possible to perform a brazing-repair for the defected stator vane without grinding a thin oxidized film formed on a surface of the crack. In addition, a diffusion of the melting point lowering agent into the base material is promoted, and a factor of lowering the strength can be removed. Furthermore, the brazing material can be penetrated into a tip portion of the crack.

The invention may be embodied in other specific forms without departing from the scope of the invention as defined in the appended claims. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A method of regenerating gas-turbine stator vane (1) composed of base material and having cracks (2) formed in the base material and oxidized layer formed at surface portion of the base material, the method comprising the steps of:
grinding the oxidized layer and the cracks (2) so that a part of the cracks (2) remains thereby to form a ground portion;
filling an equivalent material (3) and a brazing material (4) into said ground portion thereby to form a filled portion, said equivalent material (3) having an equality with said base material for the stator vane (1), and said brazing material (4) having a melting point lower than that of said equivalent material (3);
heat treating said filled portion under pressurized inert gas atmosphere so as to melt the brazing material;
performing brazing treatment by diffusing the molten brazing material (4) into the cracked portions, and
**characterized in that**
in the filling step, said equivalent material (3) and said brazing material (4) are filled into the ground portion so as to form a powder mixture layer having a three-layered structure comprising: an outermost layer formed at the surface of the stator vane, a base-side layer formed at the surface of the base material of the stator vane, and an intermediate layer formed between the outermost layer and the base-side layer,
wherein an amount ratio of the brazing material (4), contained in the outermost layer or the base-side layer is larger than that of the intermediate layer, while an amount ratio of the equivalent material (3) contained in the intermediate layer is larger than that of the outermost layer or the base-side layer, or
the amount ratio of the brazing material (4), is step-wisely or continuously increased in a range from the intermediate layer toward the outermost layer or the base-side layer, and
in the brazing treatment, brazing is performed under the pressurized inert gas atmosphere, wherein said inert gas atmosphere is controlled to have a pressure of 95 to 200 MPa, and, after the brazing treatment, conducting a solution heat treatment and an aging heat treatment to the repaired stator vane, while said solution heat treatment and the aging heat treatment are performed at a temperature of 1100-1300 °C, that is lower than a temperature at which said base material is partially molten, or performed at a temperature lower than a temperature at which a cell structure formed of eutectic carbide is collapsed.

2. A method of regenerating gas- turbine stator vane (1) according to Claim 1, wherein when a total length of said cracks (2) is, longer than a chord length of the stator vane (1), the oxidized layer formed on entire surface of the stator vane (1) is ground and the cracked portions are ground without completely grinding the cracked portion so that a part of the cracks (2) remains, then an entire stator vane (1) is covered with the equivalent material (3) and the brazing material (4) so as to completely repair the cracks (2).

3. A method of regenerating gas-turbine stator vane according to Claim 1 or 2, wherein said equivalent material (3) has a composition containing 20-35 wt% of Cr, 5-60wt% of Ni, 0.5-2 wt% of Fe, 5-10 wt% of W, 0.1-0.5 wt% of C, 0.005-2 wt% of B, and balance of Co, while said brazing material (4) has a composition containing 10-40 wt% of Cr, 8.5-70 wt% of Ni, 0.5-2 wt% of Fe, 9 wt% or less including 0% of W, 0.001-0.6 wt% of C, 0.01-3.5 wt% of B, 1.0-11 wt% of Si, 2 wt% or less and not including 0% of Mn, and balance of Co.

4. A method of regenerating gas-turbine stator vane according to Claims 1 or 2, wherein said equivalent material (3) has a composition containing 5-35 wt% of Cr, 5-75 wt% of Ni, 2 wt% or less including 0% of Fe, 12 wt% or less and not including 0% of W, 0.6 wt% or less and not including 0% of C, 1 wt % or less including 0% of B, 2 wt % or less including 0 % of Hf, 6 wt% or less and not including 0%) of Ti, 3 wt% or less and not including 0% of Nb, 5 wt% or less including 0% of Re, 5 wt% or less including 0% of Mo, 8 wt% or less and not including 0% of Ta, 65 wt% or less and not including 0% of Al, 0.7 wt% or less including 0% of Zr, and balance, in particular 45-65 %, of Co, while said brazing material (4) has a composition containing 10-40 wt% of Cr, 8.5-70 wt% of Ni, 0.5-2 wt% of Fe, 9wt% or less including 0% of W, 0.001-0.6 wt% of C, 0.01-3.5 wt% of B, 1.0-11 wt% of Si, 2 wt% or less and not including 0% of Mn, and balance of Co.

## Patentansprüche

1. Verfahren zum Regenerieren einer Statorschaufel (1) einer Gasturbine, welche Statorschaufel aus einem Basismaterial zusammengesetzt ist und in dem Basismaterial ausgebildete Risse (2) und eine an einem Oberflächenbereich des Basismaterials ausgebildete oxidierte Schicht aufweist, welches Verfahren die Schritte enthält:
Abschleifen der oxidierten Schicht und der Risse (2) derart, dass ein Teil der Risse (2) verbleibt und einen Grundbereich bildet;
Füllen eines äquivalenten Materials (3) und eines Lötmaterials (4) in den Grundbereich, wodurch ein gefüllter Bereich gebildet wird, wobei das äquivalente Material (3) eine Gleichwertigkeit mit dem Basismaterial für die Statorschaufel (1) aufweist und das Lötmaterial (4) einen Schmelzpunkt niedriger als der des äquivalenten Materials (3) hat;
Wärmebehandeln des gefüllten Bereiches unter einer unter Druck stehenden Inertgasatmosphäre, so dass das Lötmaterial geschmolzen wird;
Durchführen einer Lötbehandlung durch Diffundieren des geschmolzenen Lötmaterials (4) in die Rissbereiche,
**dadurch gekennzeichnet, dass**
in dem Füllschritt das äquivalente Material (3) und das Lötmaterial (4) in den Grundbereich eingefüllt werden, so dass eine Pulvermischschicht mit dreischichtiger Struktur ausgebildet wird, die enthält: eine äußerste Schicht, die an der Oberfläche der Statorschaufel ausgebildet ist, eine basisseitige Schicht, die an der Oberfläche des Basismaterials der Statorschaufel ausgebildet ist, und eine Zwischenschicht, die zwischen der äußersten Schicht und der basisseitigen Schicht ausgebildet ist,
wobei ein Mengenverhältnis des in der äußersten Schicht oder der basisseitigen Schicht enthaltenen Lötmaterials (4) größer ist als das der Zwischenschicht während ein Mengenverhältnis des in der Zwischenschicht enthaltenen äquivalenten Materials (3) größer ist als das der äußersten Schicht oder der basisseitigen Schicht, oder
das Mengenverhältnis des Lötmaterials (4) stufenweise oder kontinuierlich in einem Bereich von der Zwischenschicht in Richtung auf die äußerste Schicht oder die basisseitige Schicht vergrößert wird, und
in der Lötbehandlung Löten unter der unter Druck stehenden Inertgasatmosphäre durchgeführt wird, wobei die Inertgasatmosphäre derart gesteuert wird, dass sie einen Druck von 95 bis 200 MPa hat, und, nach der Lötbehandlung eine Lösungswärmebehandlung und eine Alterungswärmebehandlung an der reparierten Statorschaufel durchgeführt wird, während die Lösungswärmebehandlung und die Alterungswärmebehandlung bei einer Temperatur von 1100 bis 1300 °C durchgeführt werden, die niedriger ist als eine Temperatur, bei der das Basismaterial teilweise geschmolzen ist, oder bei einer Temperatur durchgeführt wird, die niedriger als eine Temperatur ist, bei der eine aus eutektischem Carbid gebildete Zellenstruktur zusammenbricht.

2. Verfahren zum Regenerieren einer Statorschaufel (1) einer Gasturbine nach Anspruch 1, wobei, wenn eine Gesamtlänge der Risse (2) länger als eine Sehnenlänge der Statorschaufel (1) ist, die an der gesamten Oberfläche der Statorschaufel (1) ausgebildete oxidierte Schicht abgeschliffen wird und die Rissbereiche abgeschliffen werden, ohne den Rissbereich vollständig abzuschleifen, so dass ein Teil der Risse (2) zurückbleibt, dann eine gesamte Statorschaufel (1) mit dem äquivalenten Material (3) und dem Lötmaterial (4) bedeckt wird, so dass die Risse (2) vollständig repariert werden.

3. Verfahren zum Regenerieren einer Statorschaufel einer Gasturbine nach Anspruch 1 oder 2, wobei das äquivalente Material (3) eine Zusammensetzung hat, die aufweist, 20-35 Gew.% an Cr, 5-60 Gew.% an Ni, 0,5-2 Gew.% an Fe, 5-10 Gew.% an W, 0,1-0,5 Gew.% an C, 0,005-2 Gew.% an B und den Rest an Co, während das Lötmaterial (4) eine Zusammensetzung aufweist, die enthält 10-40 Gew.% an Cr, 8,5-70 Gew.% an Ni, 0,5-2 Gew.% an Fe, 9 Gew.% oder weniger einschließlich 0% an W, 0,001-0,6 Gew.% an C, 0,01-3,5 Gew.% an B, 1,0-11 Gew.% an Si, 2 Gew.% oder weniger und nicht 0 % enthaltend an Mn, und den Rest an Co.

4. Verfahren zum Regenerieren einer Statorschaufel einer Gasturbine nach Anspruch 1 oder 2, wobei das äquivalente Material (3) eine Zusammensetzung aufweist, die enthält 5-35 Gew.% an Cr, 5-75 Gew.% an Ni, 2 Gew.% oder weniger einschließlich 0 % an Fe, 12 Gew.% oder weniger und nicht 0 % enthaltend an W, 0,6 Gew.% oder weniger und nicht 0 % enthaltend an C, 1 Gew.% oder weniger einschließlich 0 % an B, 2 Gew.% oder weniger einschließlich 0 % an Hf, 6 Gew.% oder weniger und nicht 0 % enthaltend an Ti, 3 Gew.% oder weniger und nicht 0 % enthaltend an Nb, 5 Gew.% oder weniger einschließlich 0 % an Re, 5 Gew.% oder weniger einschließlich 0 % an Mo, 8 Gew.% oder weniger und nicht 0 % enthaltend an Ta, 65 Gew.% oder weniger und nicht 0 % enthaltend an Al, 0,7 Gew.% oder weniger einschließlich 0 % an Zr und den Rest, insbesondere 5-65 Gew.% an Co, während das Lötmaterial (4) eine Zusammensetzung aufweist, die enthält 10-40 Gew.% an Cr, 8,5-70 Gew.% an Ni, 0,5-2 Gew.% an Fe, 9 Gew.% oder weniger einschließlich 0 % an W, 0,001-0,6 Gew.% an C, 0,01-3,5 Gew.% an B, 1,0-11 Gew.% an Si, 2 Gew.% oder weniger und nicht 0 % enthaltend an Mn und den Rest an Co.

## Revendications

1. Procédé de régénération d'une pale fixe de stator (1) de turbine à gaz composée d'un matériau de base et ayant des fissures (2) formées dans le matériau de base et une couche oxydée formée au niveau de la partie de surface du matériau de base, le procédé comprenant les étapes consistant à :
polir la couche oxydée et les fissures (2) de façon à ce qu'une partie des fissures (2) reste pour former ainsi une partie meulée ;
placer pour rebouchage un matériau équivalent (3) et un matériau de brasage (4) dans ladite partie meulée pour former ainsi une partie rebouchée, ledit matériau équivalent (3) ayant une égalité avec ledit matériau de base pour la pale fixe de stator (1) et ledit matériau de brasage (4) ayant un point de fusion inférieur à celui dudit matériau équivalent (3) ;
traiter par chauffage ladite partie rebouchée sous atmosphère à gaz inerte sous pression de façon à faire fondre le matériau de brasage ; et
réaliser un traitement de brasage en diffusant le matériau de brasage (4) fondu dans les parties fissurées;
**caractérisé en ce que**
à l'étape de bouchage, ledit matériau équivalent (3) et ledit matériau de brasage (4) sont placés pour rebouchage dans la partie meulée de façon à former une couche de mélange de poudres ayant une structure à trois couches comprenant : une couche la plus à l'extérieur formée au niveau de la surface de la pale fixe de stator, une couche située du côté de la base formée au niveau de la surface du matériau de base de la pale fixe de stator et une couche intermédiaire formée entre la couche la plus à l'extérieur et la couche située du côté de la base,
une quantité de matériau de brasage (4) contenu dans la couche la plus à l'extérieur ou dans la couche située du côté de la base étant supérieure à celle de la couche intermédiaire, tandis qu'une quantité de matériau équivalent (3) contenu dans la couche intermédiaire étant supérieure à celle de la couche la plus à l'extérieur ou de la couche située du côté de la base, ou
la quantité de matériau de brasage (4) étant augmentée par palier ou en continu dans une fourchette allant de la couche intermédiaire vers la couche la plus à l'extérieur ou la couche située du côté de la base, et
lors du traitement de brasage, le brasage est réalisé sous l'atmosphère à gaz inerte sous pression, ladite atmosphère de gaz inerte étant contrôlée de façon à présenter une pression de 95 à 200 MPa, et, après le traitement de brasage, à effectuer un traitement par chauffage de solution et un traitement de chauffage vieillissant sur la pale fixe de stator réparée, tandis que ledit traitement de chauffage de solution et ledit traitement de chauffage vieillissant sont réalisés à une température de 1100-1300°C, inférieure à une température à laquelle ledit matériau de base est partiellement fondu, ou réalisés à une température inférieure à une température à laquelle une structure cellulaire formée de carbure eutectique est affaissée.

2. Procédé de régénération d'une pale fixe de stator de turbine à gaz selon la revendication 1, dans lequel lorsqu'une longueur totale desdites fissures (2) est supérieure à une longueur de corde de la pale fixe de stator (1), la couche oxydée formée sur la surface entière de la pale fixe de stator (1) est meulée et les parties fissurées sont meulées sans polir complètement les parties fissurées de façon à ce qu'une partie des fissures (2) reste, puis une pale fixe de stator (1) entière est couverte avec le matériau équivalent (3) et le matériau de brasage (4) de façon à réparer complètement les fissures (2).

3. Procédé de régénération de pale fixe de stator de turbine à gaz selon la revendication 1 ou 2, dans lequel ledit matériau équivalent (3) a une composition contenant 20-35 % en poids de Cr, 5-60 % en poids de Ni, 0,5-2 % en poids de Fe, 5-10 % en poids de W, 0,1-0,5 % en poids de C, 0,005-2 % en poids de B et un équilibre de Co, tandis que ledit matériau de brasage (4) a une composition contenant 10-40 % en poids de Cr, 8,5-70 % en poids de Ni, 0,5-2 % en poids de Fe, 9 % en poids au moins comprenant 0 % de W, 0,001-0,6 % en poids de C, 0,01-3,5 % en poids de B, 1,0-11 % en poids de Si, 2 % en poids ou moins et ne comprenant pas 0 % de Mn, et un équilibre de Co.

4. Procédé de régénération d'une pale fixe de stator de turbine à gaz selon les revendications 1 ou 2, dans lequel ledit matériau équivalent (3) a une composition contenant 5-35 % en poids de Cr, 5-75 % en poids de Ni, 2 % en poids ou moins comprenant 0 % de Fe, 12 % en poids ou moins et ne comprenant pas 0 % de W, 0,6 % en poids ou moins et ne comprenant pas 0 % de C, 1 % en poids ou moins comprenant 0 % de B, 2 % en poids ou moins comprenant 0 % de Hf, 6 % en poids ou moins et ne comprenant pas 0 % de Ti, 3 % en poids ou moins et ne comprenant pas 0 % de Nb, 5 % en poids ou moins comprenant 0 % de Re, 5 % en poids ou moins comprenant 0 % de Mo, 8 % en poids ou moins et ne comprenant pas 0 % de Ta, 65 % en poids ou moins et ne comprenant pas 0 % de Al, 0,7 % en poids ou moins comprenant 0 % de Zr, et l'équilibre, en particulier 45-65 % de Co, tandis que ledit matériau de brasage (4) a une composition contenant 10-40 % en poids de Cr, 8,5-70 % en poids de Ni, 0,5-2 % en poids de Fe, 9 % en poids ou moins comprenant 0 % de W, 0,001-0,6 % en poids de C, 0,01-3,5% en poids de B, 1,0-11 % en poids de Si, 2 % en poids ou moins et ne comprenant pas 0 % de Mn, et l'équilibre de Co.
